(19) Europäisches Patentamt
European Patent Office
Office européen des brevets

(11) **EP 3 716 781 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(21) Anmeldenummer: **18748845.7**

(22) Anmeldetag: **21.06.2018**

(51) Int Cl.:
*A23L 2/04* (2006.01)    *A23L 2/72* (2006.01)
*A23L 33/20* (2016.01)

(86) Internationale Anmeldenummer:
**PCT/AT2018/000059**

(87) Internationale Veröffentlichungsnummer:
**WO 2019/104360 (06.06.2019 Gazette 2019/23)**

(54) **VERFAHREN ZUR HERSTELLUNG EINES ZUCKERREDUZIERTEN FRUCHTSAFTS, INSBESONDERE APFELSAFTS**

METHOD FOR PRODUCING A SUGAR-REDUCED FRUIT JUICE, IN PARTICULAR APPLE JUICE

PROCÉDÉ DE PRODUCTION D'UN JUS DE FRUIT ALLÉGÉ EN SUCRE, EN PARTICULIER JUS DE POMME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2017 AT 25617 U**

(43) Veröffentlichungstag der Anmeldung:
**07.10.2020 Patentblatt 2020/41**

(73) Patentinhaber: **"Gradient" process technology GmbH**
**1190 Wien (AT)**

(72) Erfinder:
• **NOVALIN-CANOY, Patricia**
**1190 Wien (AT)**
• **NOVALIN, Timon**
**1190 Wien (AT)**

(74) Vertreter: **Miksovsky, Alexander**
**Patentanwalt Miksovsky KG**
**Bisamberger Strasse 19**
**2100 Korneuburg (AT)**

(56) Entgegenhaltungen:
**US-A- 5 403 604    US-A1- 2006 105 089**

• **CEBULJ ANKA ET AL: "Importance of metabolite distribution in apple fruit", SCIENTIA HORTICULTURAE, Bd. 214, 4. Dezember 2016 (2016-12-04), Seiten 214-220, XP029852533, ISSN: 0304-4238, DOI: 10.1016/J.SCIENTA.2016.11.048 in der Anmeldung erwähnt**

**Beschreibung**

Die vorliegende Erfindung bezieht sich auf ein Verfahren zur Herstellung eines zuckerreduzierten Apfelsafts, wobei Bestandteile der Frucht insbesondere nach einem teilweisen Zerkleinern oder Fraktionieren zur Gewinnung des Fruchtsafts gepresst werden, wobei zumindest ein Anteil des aus dem gepressten Fruchtfleisch gewonnenen Safts einem wenigstens teilweisen Entzuckerungsverfahren unterworfen wird.

Eine nahezu selektive Abtrennung von Zuckern, wie Glucose, Fructose oder Saccharose aus Fruchtsäften oder ähnlichen flüssigen Fruchtmischungen, wie beispielsweise sogenannten Smoothies, ist technologisch äußert schwierig und nach dem derzeitigen Stand der Technik wirtschaftlich sinnvoll kaum durchführbar. Hierbei ist oftmals nicht erforderlich, den Zucker nahezu vollständig abzutrennen. Demgegenüber genügt beispielsweise eine Reduktion des Zuckergehalts im Ausmaß von etwa einem Drittel bis etwa einer Hälfte, wobei insbesondere gefordert wird, dass weitere wertvolle Inhaltsstoffe, wie beispielsweise Geschmackstoffe, Aromastoffe, Polyphenole und Säuren oder dgl. im Wesentlichen unverändert beibehalten werden sollen. Zu diesem Zweck können beispielsweise chromatographische Verfahren angewandt werden, welche aus verschiedenen Gründen jedoch wirtschaftlich nicht sinnvoll durchführbar sind.

Ein Verfahren der eingangs genannten Art ist beispielsweise der US 5 403 604 A zu entnehmen, wobei zur Herstellung eines zuckerreduzierten Fruchtsafts ein Anteil des aus einem gepressten Fruchtfleisch gewonnenen Safts einem Entzuckerungsverfahren unterworfen wird und nachfolgend ein Mischen mit aus weiteren Fruchtkomponenten gewonnenem Fruchtsaft erfolgt.

Darüber hinaus ist aus der US 2006/0105089 A1 ein Verfahren zur Herstellung eines Zitrussafts bekannt geworden, wobei auf eine Extraktion von Komponenten der Schale einer derartigen Zitrusfrucht abgezielt wird.

Die Anmelderin der vorliegenden Anmeldung hat weiters einige Untersuchungen durchgeführt, inwieweit der Zuckergehalt in Früchten, beispielsweise Äpfeln, gleichmäßig verteilt ist, wobei sich gezeigt hat, dass, wie dies vermutet wurde, eine gleichmäßige Verteilung des Zuckergehalts in einer Frucht, insbesondere einem Apfel, nicht vorliegt. Diese Annahme bzw. diese Feststellung wurde vor kurzem im Rahmen einer wissenschaftlichen Untersuchung bestätigt (siehe "Importance of metabolite distribution in apple fruit, Anka Cebulj, Vlasta Cunja, Maja Mikulic-Petkovsek, Robert Veberic, Scientia Horticulturae, Vol. 214, 5. Jänner 2017, Seiten 214-220"). Hierbei hat sich gezeigt, dass bekannter Weise in der Schale vor allem wichtige sekundäre Pflanzeninhaltsstoffe, wie beispielsweise Polyphenole, Geschmacksstoffe, etc. in einem weitaus überwiegenden Anteil enthalten sind. Weiters hat sich gezeigt, dass üblicherweise der Zuckeranteil ausgehend von dem Bereich unmittelbar unterhalb der Schale in Richtung zum Kern bzw. Zentrum abnimmt, wobei Unterschiede im Zuckeranteil in der Größenordnung von wenigstens 15 %, insbesondere wenigstens 20 % bis 25 % feststellbar sind. Weiters hat sich gezeigt, dass in dem zuckerreichen Teil im Bereich des Außenumfangs bzw. -bereichs des Fruchtfleischs unmittelbar unterhalb der Schale mehr Zweifachzucker oder Mehrfachzucker, insbesondere Saccharose, vorliegen, während im Kernbereich bzw. mittleren Volumsbereich des Fruchtfleischs der Anteil an Einfachzucker, insbesondere in Form von Glucose, überwiegt, so dass insgesamt die Verteilung unterschiedlicher Arten von Zucker unterschiedlich ist.

Die vorliegende Erfindung zielt daher darauf ab, unter Berücksichtigung der Erkenntnisse im Hinblick insbesondere auf eine unterschiedliche Verteilung des Zuckergehalts bzw. Zuckeranteils in Äpfeln, welche zur Herstellung eines Fruchtsafts bzw. allgemein von Fruchtgetränken herangezogen werden, in wirtschaftlich sinnvoller und einfacher Weise eine Zuckerreduktion zur Verfügung zu stellen.

Zur Lösung dieser Aufgaben ist ein Verfahren der eingangs genannten Art im Wesentlichen dadurch gekennzeichnet, dass vor dem Pressen die Schale der Frucht durch ein Schälen entfernt wird und die Schale einem getrennten Pressen oder einem Pressen mit lediglich einem Anteil des Fruchtfleischs unterworfen wird, dass nach einem Entfernen der Schale eine oberste Schicht des Fruchtfleischs am Außenumfang bzw. -bereich der Frucht von einem Kernbereich des Fruchtfleischs getrennt wird und diese zwei Anteile des voneinander getrennten Fruchtfleischs jeweils einem getrennten Pressvorgang unterworfen werden, und dass der aus dem Entzuckerungsverfahren erhaltene Saft mit dem Saft aus dem Pressen der Schale und gegebenenfalls dem Saft aus dem verbleibenden Anteil des Fruchtfleischs vereinigt bzw. gemischt wird. Dadurch, dass erfindungsgemäß vor einem Pressen die Schale der Frucht durch ein Schälen entfernt wird, wird sichergestellt, dass die in der Schale zu einem hohen Anteil enthaltenen sekundären Pflanzeninhaltsstoffe, wie beispielsweise Polyphenole, Geschmacksstoffe, etc. in einem nachfolgend herzustellenden Fruchtsaft uneingeschränkt enthalten sind, so dass durch die erfindungsgemäß angestrebte Zuckerreduktion eine Beeinträchtigung bzw. insbesondere Reduktion derartiger sekundärer Pflanzeninhaltsstoffe durch ein vorangehendes Abschälen der außenliegenden Schale vermieden wird. Darüber hinaus ist vorgesehen, dass neben einem Entfernen der Schale vor dem Pressen und einem nachfolgenden Pressen der Schale gegebenenfalls mit einem Anteil des Fruchtfleischs, ein Anteil des aus einem weiteren Anteil des Fruchtfleischs gewonnenen Safts getrennt einer Zuckerreduktion bzw. einem Entzuckerungsverfahren unterworfen wird. Nachfolgend wird erfindungsgemäß vorgeschlagen, dass der aus dem Pressen der Schale, gegebenenfalls mit einem Anteil des Fruchtfleischs, gewonnene Saft mit dem aus dem Entzuckerungsverfahren gewonnenen Saft vermischt bzw. vereinigt wird, um derart einen Apfelsaft als Fruchtsaft zur Verfügung zu stellen, welcher einerseits in seinem Zuckergehalt reduziert ist, wobei jedoch andererseits die insbesondere in der Schale überwiegend enthaltenen sekundären Pflanzeninhaltsstoffe vollständig in dem herzustellenden Fruchtsaft enthalten sind.

Wie oben ausgeführt, wurde im Rahmen von Untersuchungen festgestellt, dass im Fruchtfleisch der Zuckergehalt in einer Frucht ungleichmäßig sowohl im Hinblick auf den Zuckergehalt als auch die Art des Zuckers verteilt ist. In diesem Zusammenhang wird erfindungsgemäß weiters vorgeschlagen, dass nach einem Entfernen der Schale eine oberste Schicht des Fruchtfleischs am Außenumfang bzw. -bereich der Frucht von einem Kernbereich des Fruchtfleischs getrennt wird und diese zwei Anteile des voneinander getrennten Fruchtfleischs jeweils einem getrennten Pressvorgang unterworfen werden. Dadurch wird es erfindungsgemäß möglich, Bereiche bzw. Anteile des Fruchtfleischs mit unterschiedlichem Zuckeranteil und wenigstens teilweise unterschiedlicher Art bzw. chemischer Konsistenz des Zuckers teilweise voneinander zu trennen, wobei erfindungsgemäß aus den voneinander getrennten Anteilen des Fruchtfleischs in einem jeweils getrennten Pressvorgang ein Saft hergestellt wird. Für eine besonders einfache Trennung der einzelnen Bereiche bzw. Anteile des Fruchtfleischs wird hierbei bevorzugt vorgeschlagen, dass die Trennung der obersten Schicht des Fruchtfleischs am Außenumfang bzw. -bereich der Frucht ähnlich einem Schälvorgang durchgeführt wird.

Alternativ zu einem insbesondere mit einem Schälvorgang vergleichbaren Trennvorgang zur Unterteilung des Fruchtfleischs in eine oberste Schicht am Außenumfang und ein Fruchtfleisch im Kernbereich wird gemäß einer abgewandelten erfindungsgemäßen Ausführungsform vorgeschlagen, dass nach einem Entfernen der Schale eine Trennung des Fruchtfleischs in einen Kernbereich und einen am Außenumfang liegenden Anteil durch ein Entfernen, insbesondere Ausstanzen des Kernbereichs durchgeführt wird. Derart lässt sich beispielsweise mit einer Vorrichtung, wie sie in ähnlicher Weise zur Entfernung eines Kerngehäuses beispielsweise durch Einsatz einer zylinderförmigen Stanzvorrichtung verwendet wird, durch entsprechend größere Bemessung des insgesamt zu entfernenden Kernbereichs des Fruchtfleischs eine Trennung in einen Anteil des Fruchtfleischs am Außenumfang bzw. an einer obersten Schicht des Fruchtfleischs und einen Anteil des Fruchtfleischs im Kernbereich der Frucht vornehmen. Wie bei der vorangehenden Ausführungsform ähnlich einem Schälvorgang lassen sich somit Bereiche bzw. Anteile des Fruchtfleischs mit unterschiedlichem Zuckeranteil und/oder wenigstens teilweise unterschiedlicher Art bzw. chemischer Konsistenz des Zuckers voneinander trennen und nachfolgend getrennten Pressvorgängen und einem wenigstens teilweise vorzunehmenden Entzuckerungsverfahren unterwerfen.

Zur Erzielung einer angestrebten Zuckerreduktion wird im Zusammenhang mit dem erfindungsgemäßen Verfahren darüber hinaus vorgeschlagen, dass der vom Außenumfang der Frucht zu trennende Anteil des Fruchtfleischs zwischen 15 und 50 Vol.-%, insbesondere 25 bis 40 Vol.-% des gesamten Volumens des Fruchtfleischs entspricht, wie dies einer weiteren bevorzugten Ausführungsform des erfindungsgemäßen Verfahrens entspricht. Derart gelingt es insbesondere, mit einfachen und zuverlässigen Mitteln im Rahmen eines nachfolgenden Entzuckerungsverfahrens einen entsprechend hohen Zuckeranteil aus einem Gesamtprodukt des herzustellenden Fruchtsafts zu entfernen.

Zur Erzielung einer entsprechenden Zuckerreduktion bei Behandlung lediglich eines Teils des aus dem Fruchtfleisch zu gewinnenden Fruchtsafts wird gemäß einer weiters bevorzugten Ausführungsform vorgeschlagen, dass der aus dem Fruchtfleisch am Außenumfang der Frucht gewonnene Saft einem Entzuckerungsverfahren durch Separation, insbesondere Nanofiltration und/oder Diafiltration unterworfen wird. Durch die erfindungsgemäß vorgeschlagene Anwendung des Entzuckerungsverfahrens an dem aus dem Fruchtfleisch am Außenumfang der Frucht gewonnenen Saft durch eine Separation, insbesondere Nanofiltration, gelingt es in einfacher und ökonomisch zuverlässiger sowie sinnvoller Weise, den insbesondere im Fruchtfleisch am Außenumfang der Frucht enthaltenen Mehrfachzucker zu entfernen, so dass ein entsprechend hoher Anteil der einen hohen. Nährwert aufweisenden Substanz entfernt werden kann. Unter Berücksichtigung der Molekülgröße, welche bei Mehrfachzucker entsprechend größer als bei Einfachzucker ist, lässt sich somit mit derartigen, vergleichsweise einfachen Separations- bzw. Filtrationsverfahren eine zuverlässige selektive Entfernung derartiger Mehrfachzucker durchführen. Eine Diafiltration kann beispielsweise mit einem vorgepressten und teilweise entzuckerten Saft des Fruchtfleischs erfolgen, um insbesondere einen Zusatz von Wasser oder anderen Verdünnungsmitteln zu vermeiden. Weiters ist es möglich, ein mehrstufiges Nanofiltrationsverfahren mit jeweils unterschiedlicher Porengröße durchzuführen.

Insbesondere bei einer erfindungsgemäßen Verfahrensführung, wonach aus dem Saft, welcher aus dem Fruchtfleisch am Außenumfang der Frucht gewonnen wird, durch eine Separation der Zuckergehalt entsprechend reduziert wird, wird gemäß einer weiters bevorzugten Ausführungsform vorgeschlagen, dass die Schale mit dem Fruchtfleisch aus dem Kernbereich der Frucht in einem gemeinsamen Pressvorgang gepresst wird. Derart kann insbesondere auf ein gegebenenfalls aufwendigeres getrenntes Pressen der Schale zur Gewinnung insbesondere der sekundären Pflanzeninhaltsstoffe verzichtet werden, und es kann die Schale gemeinsam mit dem Fruchtfleisch aus dem Kernbereich der Frucht in einem an sich bekannten bzw. üblichen Pressvorgang gepresst werden.

Anstelle einer Trennung des Fruchtfleischs in unterschiedliche Anteile bzw. Fraktionen insbesondere in einen Anteil vom Außenumfang des Fruchtfleischs unterhalb der zuvor entfernten Schale und einen Anteil des Kernbereichs desselben wird in einer abgewandelten Ausführungsform des erfindungsgemäßen Verfahrens vorgeschlagen, dass ein Anteil des aus einem Pressen des gesamten Fruchtfleischs erhaltenen Safts einem Entzuckerungsverfahren durch Separation, insbesondere einer Nanofiltration und/oder Diafiltration unterworfen wird. Auch bei einem gemeinsamen Pressen des gesamten Fruchtfleischs nach Abtrennung der Schale gelingt in einem einfachen Separations- bzw. insbesondere Nanofiltrationsprozess eine einfache und zuverlässige Abtrennung insbesondere von Mehrfachzuckern, welche wiederum in einfacher und zuverlässiger Weise eine entsprechende Reduktion des einen hohen bzw. höheren Nährwert aufweisenden Zuckers ermöglichen.

Zur Unterstützung des Pressvorgangs und insbesondere zur Erzielung einer entsprechend hohen Ausbeute an Saft aus dem zu pressenden Fruchtfleisch bzw. den voneinander getrennten Anteilen des Fruchtfleischs wird gemäß einer weiters bevorzugten Ausführungsform vorgeschlagen, dass das Fruchtfleisch bzw. die voneinander getrennten Anteile des Fruchtfleischs vor einem Pressen zerkleinert wird bzw. werden.

Nachdem durch Durchführung des Entzuckerungsverfahrens neben einer Entfernung wenigstens eines Anteils von Zucker ein geringer Verlust an einer herzustellenden Saftmenge eintreten kann, wird zur Kompensation eines derartigen Verlusts während des Entzuckerungsverfahrens gemäß einer weiters bevorzugten Ausführungsform vorgeschlagen, dass ein durch das Entzuckerungsverfahren entstandener Volumsverlust des Safts durch eine Zugabe flüssiger Bestandteile, insbesondere von Wasser und/oder konventionell gepresstem und entzuckertem Fruchtsaft, ausgeglichen wird. Ein derartiger Zusatz von Wasser zum Ausgleich eines Anteils eines Safts ist bei Durchführung einer Nanofiltration und/oder Diafiltration gegebenenfalls nicht erforderlich.

Zur Erzielung einer entsprechend deutlichen Zuckerreduktion bei dem herzustellenden Fruchtsaft bzw. Fruchtgetränk in der Größenordnung von beispielsweise etwa 30 bis 40 % wird insbesondere unter Berücksichtigung der Tatsache, dass erfindungsgemäß lediglich ein Anteil des aus dem Fruchtfleisch insgesamt zu gewinnenden Safts einer Zuckerreduktion unterworfen wird, darüber hinaus vorgeschlagen, dass durch Separation, insbesondere Nanofiltration und/oder Diafiltration eine Reduktion des Zuckergehalts des zu filtrierenden Anteils des Safts von wenigstens 50 %, insbesondere wenigstens 75 % vorgenommen wird, wie dies einer weiters bevorzugten Ausführungsform des erfindungsgemäßen Verfahrens entspricht.

Zur Erzielung der erfindungsgemäß angestrebten wenigstens teilweisen Zuckerreduktion wird gemäß einer weiters abgewandelten Ausführungsform des erfindungsgemäßen Verfahrens vorgeschlagen, dass lediglich ein Teil einer Charge einer zu verarbeitenden Frucht einer Zuckerreduktion nach Entfernen der Schale unterworfen wird und der restliche Anteil der Charge gemeinsam mit dem einer Zuckerreduktion nicht unterworfenen Anteil des Fruchtfleischs und/oder der Schale einem gemeinsamen Pressvorgang und einem nachfolgenden Vereinigen und Mischen mit dem aus dem Entzuckerungsverfahren erhaltenen Saft unterworfen wird. Gemäß dieser Verfahrensführung erfolgt einleitend eine Aufteilung einer Charge der zu behandelnden Frucht in einen Anteil, welcher insbesondere nach einem Entfernen der Schale einer Zuckerreduktion ähnlich den oben beschriebenen Verfahrensführungen unterworfen wird, während ein verbleibender bzw. restlicher Anteil der Charge der Frucht erfindungsgemäß einem Pressvorgang bzw. einer Behandlung mit dem einer Zuckerreduktion nicht unterworfenen Anteil des Fruchtfleischs und/oder der Schale unterworfen wird, so dass nach einem erfindungsgemäßen wiederum abschließenden Vereinigen und Mischen mit dem aus dem Entzuckerungsverfahren erhaltenen Saft insgesamt ein zuckerreduzierter Fruchtsaft gewonnen wird. Da ein Anteil einer Charge der zu behandelnden Frucht einem konventionellen Verfahren zur Herstellung eines Fruchtsafts und nicht einem aufwendigeren Entzuckerungsverfahren unterworfen wird, kann somit insgesamt der Aufwand zur Herstellung eines zuckerreduzierteri Fruchtsafts entsprechend verringert werden.

Gemäß einer weiteren abgewandelten erfindungsgemäßen Verfahrensführung wird zur Herstellung eines zuckerreduzierten Apfelsafts durch Einstellung des Zuckergehalts des Fruchtsafts vorgeschlagen, einen gemäß dem oben genannten Verfahren oder einer bevorzugten Ausführungsform hiervon hergestellten zuckerreduzierten Fruchtsaft mit einem ohne Zuckerreduktion konventionell hergestellten Fruchtsaft zu mischen. Derart lässt sich wiederum ein zuckerreduzierter Fruchtsaft zur Verfügung stellen, wobei ausgehend von einer gesamten Charge von zu verarbeitender Frucht lediglich ein Anteil dem erfindungsgemäßen Verfahren zur, Bereitstellung eines zuckerreduzierten Fruchtsafts unterworfen wird, während ein verbleibender bzw. Restanteil in einem konventionellen, weniger aufwendigen Verfahren be- bzw. verarbeitet wird, so dass insgesamt ein zuckerreduzierter Fruchtsaft bei einem verringerten Herstellungsaufwand zur Verfügung gestellt werden kann.

Gemäß einer weiters abgewandelten Ausführungsform wird in diesem Zusammenhang zur Herstellung eines zuckerreduzierten Apfelsafts durch Einstellung des Zuckergehalts des Fruchtsafts vorgeschlagen, eine Behandlung eines Teils bzw. Anteils einer Charge einer Frucht gemäß dem oben genannten Verfahren oder einer bevorzugten Ausführungsform davon zur Herstellung eines zuckerreduzierten Fruchtsafts und ein nachfolgendes Mischen mit einem aus dem Rest der Charge ohne Zuckerreduktion erhaltenen Fruchtsaft vorzunehmen. Derart lassen sich ähnliche Vorteile wie bei der vorher genannten Ausführungsform insbesondere durch Verringerung des Aufwands zur Herstellung bzw. Bereitstellung eines zuckerreduzierten Fruchtsafts zur Verfügung stellen.

Zur Erzielung der angestrebten Zuckerreduktion wird in diesem Zusammenhang gemäß einer weiters bevorzugten Ausführungsform vorgeschlagen, dass der Anteil des zuckerreduzierten Fruchtsafts mit wenigstens 35 Vol.-%, insbesondere wenigstens 50 Vol.-% gewählt wird.

Insgesamt wird somit, insbesondere unter Berücksichtigung der Tatsache bzw. Erkenntnis, dass in einem Apfel, eine ungleichmäßige Verteilung des Zuckers als auch verschiedener Arten von Zuckern enthalten sind, eine selektive Zuckerreduktion in entsprechend hohem Ausmaß bei wirtschaftlich sinnvollem bzw. vertretbarem Aufwand und insbesondere ohne wesentliche Beeinträchtigung bzw. Verringerung des Gehalts an sekundären pflanzlichen Inhaltsstoffen möglich, welche beispielsweise für den Geschmack, das Aroma, etc. eines derartigen herzustellenden Fruchtsafts bzw. Fruchtgetränks überwiegend verantwortlich sind.

Das erfindungsgemäße Verfahren wird anhand von in der beiliegenden Zeichnung schematisch dargestellten Ausführungsbeispielen näher erläutert. In dieser zeigen:

Fig. 1 ein schematisches Flussdiagramm einer ersten Ausführungsform des erfindungsgemäßen Verfahrens, in weichem nach einem Abtrennen der Schale eine Aufteilung des Fruchtfleischs in unterschiedliche Anteile erfolgt, welche jeweils einem getrennten Pressvorgang unterworfen werden;

Fig. 2 ein Flussdiagramm einer abgewandelten Ausführungsform des erfindungsgemäßen Verfahrens, wobei ebenso wie bei der Ausführungsform gemäß Fig. 1 nach einer Abtrennung der Schale eine Trennung des Fruchtfleischs in unterschiedliche Anteile vorgenommen wird;

Fig. 3 ein Flussdiagramm einer weiteren abgewandelten Ausführungsform des erfindungsgemäßen Verfahrens, wobei zur Herstellung des Fruchtsafts lediglich das aus der Schale und dem Kernbereich der Frucht stammende Fruchtfleisch mit geringerem Zuckergehalt herangezogen wird;

Fig. 4 ein Flussdiagramm einer weiteren abgewandelten Ausführungsform des erfindungsgemäßen Verfahrens, wobei ein Anteil des Safts des gesamten Fruchtfleischs einer teilweisen Zuckerreduktion unterworfen wird.

Fig. 5 ein Flussdiagramm einer weiteren abgewandelten Ausführungsform des erfindungsgemäßen Verfahrens, welches ähnlich der Verfahrensführung gemäß Fig. 1 ist, wobei eine Aufteilung des Fruchtfleischs in unterschiedliche Anteile durch einen Stanzvorgang zur Abtrennung des Kernbereichs des Fruchtfleischs vorgenommen wird; und

Fig. 6 ein Flussdiagramm einer weiteren abgewandelten Ausführungsform des erfindungsgemäßen Verfahrens. wobei eine Unterteilung einer Charge einer zu behandelnden Frucht in einen Anteil. welcher dem erfindungsgemäßen Verfahren, beispielsweise ähnlich dem Verfahren gemäß Fig. 1 zu unterwerfen ist, und einen Anteil der Charge gezeigt ist, welcher einem konventionellen Bearbeitungsvorgang beispielsweise lediglich durch ein Pressen unterworfen wird.

in der nachfolgenden Beschreibung werden die einzelnen Anteile der Früchte sowie des herzustellenden Safts jeweils mit Bezugszeichen der die entsprechenden Anteile bzw. Ströme in den Flussdiagrammen kennzeichnenden Pfeile bezeichnet.

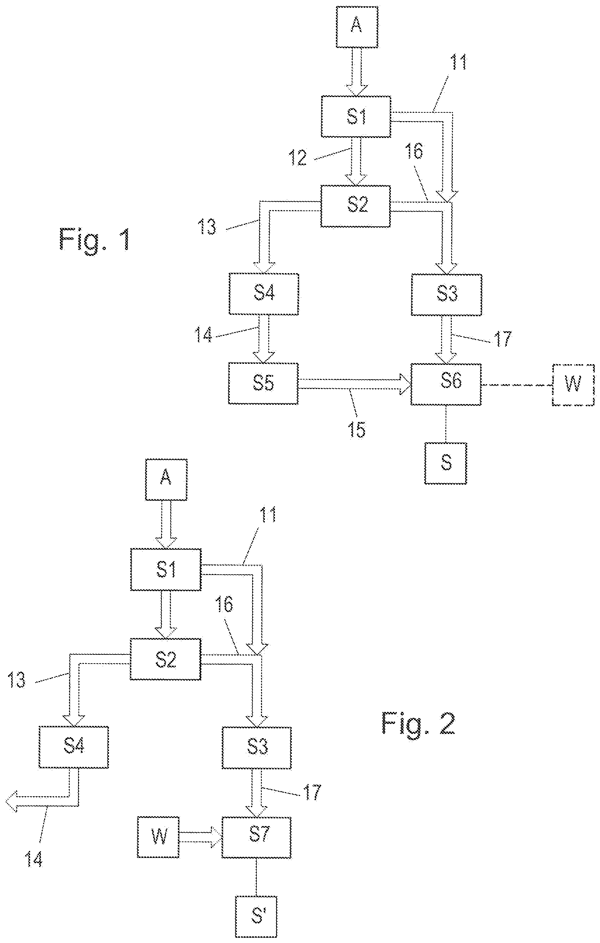

Bei der Ausführungsform gemäß Fig. 1 werden Äpfel A als Früchte zur Herstellung eines von einem Apfelsaft gebildeten Fruchtsafts bereitgestelit wobei in einem ersten Verfahrensschritt S1 die Schale 11 durch einen Schälvorgang entfernt und entsprechend dem zugehörigen Pfeil ausgebracht wird.

Das entsprechend dem zugehörigen Pfeil aus dem Schälvorgang gemäß dem Schritt S1 ausgebrachte Fruchtfleisch 12 wird in einem nachfolgenden Schritt S2 in zwei unterschiedliche Anteile bzw. Fraktionen getrennt, wobei ein Anteil 13, welcher vom Außenumfang bzw. -bereich des Fruchtfleischs in einem weiteren Schälvorgang gewonnen wird, entsprechend dem zugehörigen Pfeil aus dem Schritt S2 ausgebracht wird.

Dieser Anteil 13 des Fruchtfleischs vom Außenumfang des gesamten Fruchtfleischs wird in einem Schritt S4 einem Pressen des Fruchtfleischanteils mit höherem Zuckeranteil vom Außenumfang der Früchte unterworfen Der aus dem Schritt S4 abgezogene Saft 14 wird nachfolgend in einem Schritt S5 einer wenigstens teilweisen Abtrennung des Zuckers durch ein Separationsverfahren, insbesondere einer Nanofiltration unterworfen.

Aus dem Entzuckerungsverfahren beim Schritt S5 wird entsprechend dem zugehörigen Pfeil ein Fruchtsaftanteil 15 mit einem reduzierten Zuckergehalt gewonnen.

In dem Schritt S5 wird durch das Separationsverfahren, insbesondere die Nanofiltration und/oder Diafiltration eine Reduktion insbesondere von Zweifachzucker bzw. Mehrfachzucker in einem Ausmaß von wenigstens 60 % vorgenommen.

Neben dem im Schritt S2 gewonnenen Anteil 13 des Fruchtfleischs vom Außenumfang der gesamten Frucht wird aus dem Schritt S2 entsprechend dem zugehörigen Pfeil ein Anteil 16 von Fruchtfleisch gewonnen bzw. abgezogen, welcher insbesondere vom Kembereich des Fruchtfleischs stammt Dieser Anteil 16 des Fruchtfleischs mit gegenüber dem Anteil 13 geringerem Zuckergehalt wird gemeinsam mit der im Schritt S1 entfernten Schale 11 in einem Schritt S3 einem getrennten Pressvorgang unterworfen.

Der im Schritt S3 entsprechend dem zugehörigen Pfeil gewonnene Saftanteil 17 wird in einem Schritt S6 mit dem zuckerreduzierten Saftanteil 15 vermischt und gegebenenfails einer konventionellen Weiterverarbeitung unterworfen, um derart abschließend einen Saft S mit entsprechend reduziertem Zuckeranteil zur Verfügung zu stellen.

Zum Ausgleich eines geringen Verlusts des Safts des teilweise zuckerreduzierten Saftanteils 15 kann eine Zugabe eines flüssigen Bestandteils, insbesondere von Wasser W oder einem teilweise entzuckerten Saft erfolgen, wie dies schematisch und strichliert in Fig. 1 angedeutet ist.

Bei Durchführung einer Nanofiltration im Schritt S5 ist eine Zugabe von Wasser zum Ersatz eines fehlenden Saftanteils nicht erforderlich.

Bei einer Verarbeitung von Früchten zur Hersteilung eines Safts gemäß dem in Fig. 1 dargestellten Verfahrensablauf können folgende Parameter unter Verwendung einer durchschnittlichen Apfelsorte mit durchschnittlicher Zusammensetzung herangezogen werden:

$$\text{Apfelmasse:} \quad \text{ca } 135 \text{ g}$$
$$\text{Zuckeranteil:} \quad \text{ca. } 13{,}5 \text{ \%}$$

Zuckeranteil in der am Außenumfang liegenden Schicht des Fruchtfleischs (unterhalb der Schale und nach deren Entfernung): ca. 20 % höher als im Kernbereich des Fruchtfleischs Abtrennung der am Außenumfang liegenden Schicht des Fruchtfleischs von der gesamten

    Masse des Fruchtfleischs: etwa 30 bis 35 Vol.-%
    Zuckerreduktion des zuckerreichen Anteils 14 im Schritt S5: 75 bis 85 Vol -%
    Reduktion des Zuckergehalts des gesamten Safts etwa 30 bis 35 %

Eine beispielhafte Verfahrensführung in den einzelnen Schritten der Fig. 1 ist wie folgt.

    Apfelmasse ca 10 kg, Zuckeranteil ca. 13.5% (Saccharoseanteil des Zuckers ca. 25 %)
    Schritt S1: Entfernung der Schalen mit einer Hand-Apfelschälmaschine (Masse der Schalenfraktion ca. 0.9 kg)
    Schritt S2: Abschälen der oberen (zuckerreicheren) Fruchtfleischschicht (Masse dieser Fruchtfleischfraktion ca. 3,1 kg)
    Schritt S3: Pressen der Fruchtfleischfraktion mit niedrigerem Zuckeranteil gemeinsam mit der Schale (nach Zerkleinerung) mittels Korbpresse (Saftausbeute ca. 4.9 kg)
    Schritt S4. Pressen der Fruchtfleischfraktion mit höherem Zuckeranteil mittels Korbpresse (Saftausbeute ca 2,2 kg).
    Schritt S5: Teilweise Abtrennung des Zuckers aus Fruchtsaft mit höherem Zuckeranteil mittels Nanofiltration/Diafiltration:

    Nanofiltration (Verfahrensparameter):
    Membran auf Polyamidbasis. Druck 50 bar, Temperatur ca. 25 °C.
    Ergebnis der Nanofiltration: Permeatausbeute ca. 60 % (1,35 kg + 0,85 kg Diafiltrat), Konzentratmasse ca 0,85 kg.

    Schritt S6: Vermischen der Saftfraktionen aus Schritt 3 (4.9 kg) und 5 (2.2 kg)
    Ergebnis: Zuckeranteil im Mischsaft ca. 7.2 % (zum Vergleich Zuckeranteil im konventionell hergestellten Saft ca. 10,5 %)

Bei der in Fig. 2 dargestellten Verfahrensführung werden für gleiche Elemente gleiche Bezugszeichen verwendet, wobei eine neuerliche detaillierte Beschreibung weggelassen wird.

Ähnlich wie bei der Ausführungsform gemäß Fig 1 werden zur Hersteilung eines Fruchtsafts Apfel A bereitgestellt, welchen in einem Schritt S1 die Schale 11 entfernt wird In einem nachfolgenden Schritt S2 erfolgt wiederum eine Trennung des Fruchtfleischs in unterschiedliche Anteile, wobei der Anteil 13 des Fruchtfleischs am Außenumfang des Fruchtfleischs einem Pressvorgang S4 unterworfen wird.

Der aus dem Pressvorgang gemäß dem Schritt S4 bei dieser Ausführungsform gewonnene Saftanteil 14 wird einer getrennten Verwertung bei der Ausführungsform gemäß Fig. 2 zugeführt.

Der Anteil 16 entsprechend dem Kernbereich des Fruchtfleischs wird wiederum in dem Schritt S3 gemeinsam mit der abgetrennten Schale 11 zu einem Saft gepresst. wobei bei der Ausführungsform gemäß Fig. 2 der aus dem Pressvorgang gemäß dem Schritt S3 gewonnene Saft 17 in einem nachfoigenden Schritt S7 mit Wasser W oder einem teilweise entzuckerten Saft vermischt und vermengt wird Der Anteil des Wassers W wird hierbei im Wesentlichen derart gewählt. dass der Saftanteil 14 aus dem Fruchtfleisch mit höherem Zuckergehalt, wie er im Schritt S4 gewonnen wird, ersetzt wird

Durch die Zugabe von Wasser W wird wiederum eine entsprechende Zuckerreduktion des gesamten herzustellenden Safts S' bei einem Beibehalten des vollständigen Anteils insbesondere an sekundären Pflanzeninhaltsstoffen erzielt.

Auch bei dem Verfahren gemäß der Fig. 2 lasst sich eine Zuckerreduktion in der Größenordnung von 35 bis 40 % erzielen.

Eine beispielhafte Verfahrensführung in den einzelnen Schritten der Fig. 2 ist wie folgt:

    Apfelmasse ca. 10 kg, Zuckeranteil ca. 14 % (Saccharoseanteil des Zuckers ca. 25 %)
    Schritt S1: Entfernung der Schalen mit einer Hand-Apfelschälmaschine (Masse der Schalenfraktion ca. 0,85 kg)
    Schritt S2: Abschälen der oberen (zuckerreicheren) Fruchtfleischschicht (Masse dieser Fruchtfleisch-

**EP 3 716 781 B1**

fraktion 14 ca. 3 kg)

Schritt S3: Pressen der Fruchtfleischfraktion mit niedrigerem Zuckeranteil gemeinsam mit der Schale (nach Zerkleinerung) mittels Korbpresse (Saftausbeute ca. 4,8 kg).

Schritt S7: Vermischen der Saftfraktionen aus Schritt S3 (4,8 kg) und 2,2 kg Wasser.

Ergebnis: Zuckeranteil im Mischsaft ca. 6,8 % (zum Vergleich Zuckeranteil im konventionell hergestellten Saft ca 10,5 %)

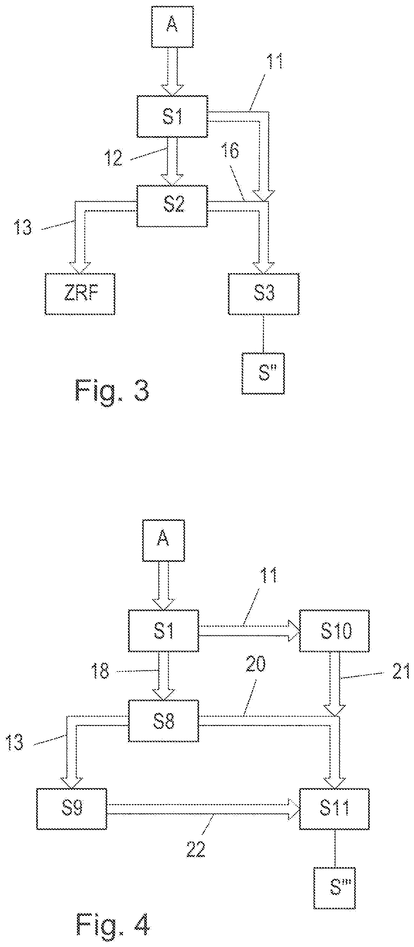

Bei der weiteren abgewandelten Ausführungsform gemäß Fig. 3 werden die Schritte S1 und S2 entsprechend ident mit den vorangehenden Ausführungsformen gemäß Fig. 1 und 2 durchgeführt.

Die im Schritt S2 als Anteil 13 gewonnen Fraktion mit erhöhtem Zuckergehalt wird als ZRF einer getrennten weiteren Verarbeitung unterworfen.

Ähnlich wie bei den vorangehenden Ausführungsformen wird der Anteil 16 des Fruchtfteischs aus dem Kernbereich wiederum mit der Schale 11 in dem Schritt S3 gepresst und als Saft S" gewonnen.

Gegenüber den vorangehenden Ausführungsformen wird bei der Verfahrensführung gemäß Fig. 3 ein entsprechend verringerter Saftanteil erhalten, welcher wiederum samtliche sekundären Pflanzeninhaltsstoffe enthält.

Durch den verringerten Zuckergehalt des Anteils 13 aus dem Kernbereich des Fruchtfleischs wird insgesamt ein zuckerreduzierter Saft S" erhalten. bei welchem das Ausmaß der Zuckerreduktion etwa 10 bis 15 % beträgt

Eine beispielhafte Verfahrensführung in den einzelnen Schritten der Fig. 3 ist wie folgt:

Apfelmasse ca. 10 kg. Zuckeranteil ca. 14 % (Saccharoseanteil des Zuckers ca 25 %)

Schritt S1: Entfernung der Schalen mit einer Hand-Apfelschälmaschine (Masse der Schalenfraktion ca. 0,83 kg)

Schritt S2: Abschälen der oberen (zuckerreicheren) Fruchtfleischschicht (Masse dieser Fruchtfieischfraktion 13 ca. 3,1 kg)

Schritt S3: Pressen der Fruchtfleischfraktion mit niedrigerem Zuckeranteil gemeinsam mit der Schale (nach Zerkleinerung) mittels Korbpresse (Saftausbeute ca. 4,8 kg).

Ergebnis. Zuckeranteil im Mischsaft ca. 9,4 % (zum Vergleich Zuckeranteil im konventionell hergestellten Saft ca. 10.5 %)

Bei der weiteren abgewandelten Ausführungsform gemäß Fig. 4 werden Äpfel A in dem Schritt S1 geschält, wobei nachfolgend das gesamte Fruchtfleisch 18 entsprechend dem zugehörigen Pfeil in einem Schritt S8 einem Pressvorgang unterworfen wird.

Aus diesem Pressvorgang S8 wird ein Anteil 19 des gesamten Safts einem Entzuckerungsverfahren unterworfen, wobei in dem Schritt S9 eine Zuckerreduktion von wenigstens 60 bis 65 % durchgeführt wird.

Die im Schritt S1 getrennten Schalen 11 werden einem getrennten Pressvorgang gemäß dem Schritt S10 unterworfen.

Der aus den Schalen gewonnene Saftanteil 21 wird mit dem verbleibenden Saftanteil 20 aus dem Pressvorgang gemäß dem Schritt S8 des gesamten Fruchtfleischs nachfolgend in einem Schritt S11 mit dem im Zuckergehalt reduzierten Saftanteil 22 aus dem Entzuckerungsverfahren gemäß dem Schritt S9 vermischt und gegebenenfalls einer konventionellen Weiterverarbeitung unterzogen.

Aus dem Schritt S11 wird ein zuckerreduzierter Saft S''' entnommen, wobei ähnlich wie bei den Ausführungsformen gemäß Fig 1 und 2 wiederum eine Zuckerreduktion von etwa 30 bis 40 % des gesamten Safts unter weitestgehender Beibehaltung sämtlicher sekundärer Pflanzeninhaltsstoffe erzielbar ist.

Eine beispielhafte Verfahrensführung in den einzelnen Schritten der Fig 4 ist wie folgt

Apfelmasse ca. 10 kg. Zuckeranteil ca. 14 % (Saccharoseanteil des Zuckers ca. 25 %)

Schritt S1: Entfernung der Schalen mit einer Hand-Apfetschälmaschine (Masse der Schalenfraktion ca. 0,84 kg)

Schritt S8. Pressen des gesamten Fruchtfleisches mit einer Korbpresse (nach Zerkleinerung)

Schritt S10: Pressen der Schale mit einer Korbpresse (nach Zerkleinerung)

Schritt S9: Abtrennung des Zuckers aus einer Fraktion des Fruchtfleischsafts (Saftmenge ca. 2,5 kg) durch Eindampfung der Lösung und Kondensation (Gewinnung) der abgedampften Fraktion.

Eindampfung:

Vakuumverdampfung bei ca. 200 mbar (Labormaßstab).

Schritt S11: Vermischen des Kondensates aus Schritt S9 und der beiden Saftfraktionen aus den Schritten S8 und S10.

Ergebnis. Zuckeranteil im Mischsaft ca. 7.1 % (zum Vergleich Zuckeranteil im konventionell hergestellten Saft ca. 10.5 %)

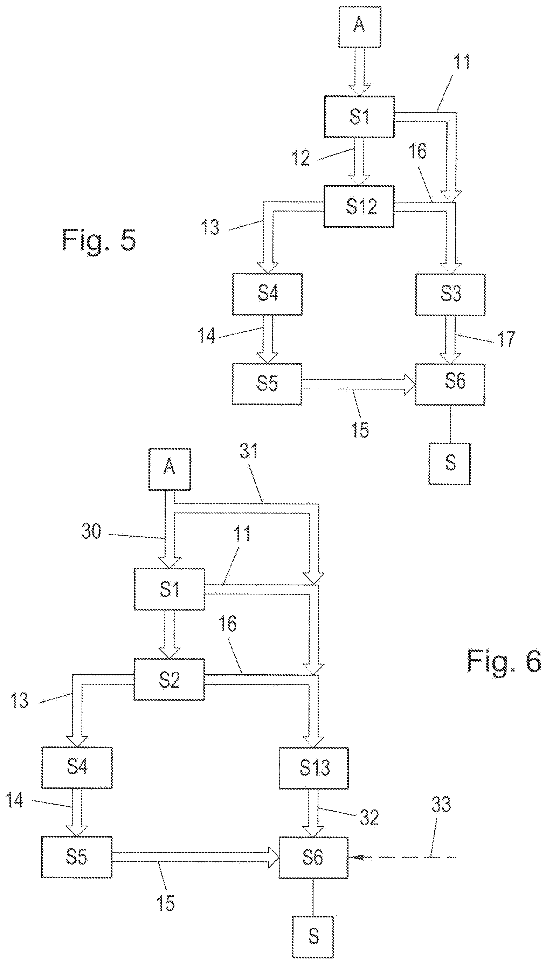

Die in Fig. 5 dargestellte Ausführungsform der Verfahrensführung unterscheidet sich von der Ausbildung gemäß Fig. 1 lediglich durch die Ausführung des Schritts einer Trennung des Fruchtfleischs in zwei unterschiedliche Anteile bzw. Fraktionen. Während bei der Ausbildung gemäß Fig 1 in einem Schritt S2 eine Unterteilung des Fruchtfleischs in einen Anteil am Außenumfang und im Kernbereich ähnlich einem Schälvorgang gemäß dem Schritt S2 vorgenommen wird, wird bei der Ausführungsform gemäß Fig. 5 in einem Schritt S12 eine Trennung des Fruchtfleischs wiederum in einen Anteil am Außenumfang und einen Anteil im Kernbereich durch einen Stanzvorgang durchgeführt. Hierbei wird ähnlich einer Entfernung eines Kernbereichs ein entsprechend größerer Kernbereich, weicher einen entsprechenden Anteil des Fruchtfleischs mit entsprechend geringerem Zuckergehalt enthält. getrennt, wobei diese Anteile 13 und 16 ähnlich wie bei der Ausführungsform gemäß Fig. 1 unterschiedlichen weiteren Bearbeitungsschritten S3 und S4 unterworfen werden.

Da die weiteren Schritte gemäß Fig. 5 den unter Bezugnahme auf Fig. 1 beschriebenen Schritten entsprechen, wird unter Beibehaltung der entsprechenden Bezugszeichen auf eine neuerliche detaillierte Beschreibung verzichtet.

Ebenso ist das zu Fig. 1 angeführte Ausführungsbeispiel auch bei der Verfahrensführung gemäß Fig. 5 anwendbar bzw. einsetzbar.

Bei der weiteren Ausführungsform gemäß Fig. 6 erfolgt einleitend nach einer Bereitstellung einer Charge von Apfeln A eine Unterteilung der Charge in einen Anteil 30, welcher nachfolgend einem Entzuckerungsverfahren, beispielsweise in Übereinstimmung mit dem Ausführungsbeispiel gemäß Fig. 1 unterworfen wird, sowie einen Anteil 31 der Charge. welcher in weiterer Folge unmittelbar dem Schritt S13 eines Pressens gemeinsam mit der abgetrennten Schale gemäß dem Anteil 11 aus dem Schritt S1 sowie dem Fruchtfleisch aus dem Kernbereich gemäß dem Anteil 16 unterworfen wird.

Der im Schritt S2 der Fig. 6 gewonnene Anteil 13 des Fruchtfleischs vom Außenumfang der gesamten Frucht wird ähnlich wie bei der Ausführungsform gemäß Fig. 1 im Schritt S4 einem Pressvorgang und im Schritt S5 einer Herstellung eines zuckerreduzierten Saftanteils 15 unterworfen.

Demgegenüber werden die Schalen gemäß dem Anteil 11 sowie der Anteil 16 des Fruchtfleischs aus dem Kernbereich gemeinsam mit dem unbehandelten Anteil 31 der Charge im Schritt S13 (weicher dem Schritt S3 der Fig. 1 entspricht) einem gemeinsamen Pressvorgang zur Bereitstellung eines Saftanteils 32 unterworfen, welcher nachfolgend im wiederum mit S6 bezeichneten Schritt einer Vermischung mit dem zuckerreduzierten Saft gemäß dem Saftanteil 15 zur Bereitstellung des Safts S unterworfen wird.

Zur Erzielung einer gewünschten Zuckerreduktion kann hierbei der Anteil 30 der Charge, welcher der Herstellung eines zuckerreduzierten Fruchtsafts unterworfen wird, mit einem Anteil von wenigstens 35 Vol.-%, insbesondere wenigstens 50 Vol.-% gewählt werden.

Die für die Herstellung des zuckerreduzierten Saftanteils aus dem Anteil 30 der Charge zum Ausführungsbeispiel gemäß Fig. 1 genannten Verfahrensparameter können auch bei der Ausführungsform gemäß Fig 6 zur Anwendung gelangen.

Anstelle der Verarbeitung des nicht einer Zuckerreduktion zu unterwerfenden Anteils 31 der Charge der zu behandelnden Frucht A kann in einem gemeinsamen Pressvorgang gemäß dem Schritt S13 kann vorgesehen sein, dass der aus dem Anteil 30 der Charge erhaltene zuckerreduzierte Saft mit einem konventionell hergestellten Saft, welcher beispielsweise aus dem Anteil 31 der Charge erhalten wird, entsprechend dem Pfeil 33 im Schritt S6 zur Bereitstellung des Safts S gemischt wird.

Anstelle eines Einsatzes von Äpfein zur Herstellung eines zuckerreduzierten Apfelsafts können auch andere, insbesondere schälbare Früchte, wie beispielsweise Birnen, Marillen etc. eingesetzt werden, welche einen ähnlichen unterschiedlichen Zuckergehalt in unterschiedlichen Bereichen des Fruchtfleischs aufweisen (nicht Teil der Erfindung).

Beiweiteren schälbaren Fruchten, wie beispielsweise Mangos, Kiwis, Orangen, etc. bei welchen die Schale nicht zur Herstellung eines Fruchtsafts genutzt wird, kann ebenfalls eine Trennung in einzelne Fraktionen des Fruchtfieischs mit unterschledlichem Zuckergehalt und eine getrennte Behandlung des Safts dieser einzelnen Fraktionen zur Erzielung eines zuckerreduzierten Fruchtsafts mit sämtlichen Fruchtinhaltsstoffen durchgeführt werden (nicht Teil der Erfindung).

**Patentansprüche**

1. Verfahren zur Herstellung eines zuckerreduzierten Apfelsafts, wobei Bestandteile der Frucht insbesondere nach einem teilweisen Zerkleinern oder Fraktionieren zur Gewinnung des Fruchtsafts gepresst werden, wobei zumindest ein Anteil (14, 19) des aus dem gepressten Fruchtfleisch gewonnenen Safts einem wenigstens teilweisen Entzuckerungsverfahren (S5, S9) unterworfen wird, **dadurch gekennzeichnet, dass** vor dem Pressen die Schale (11) der Frucht (A) durch ein Schälen entfernt wird und die Schale (11) einem getrennten Pressen oder einem Pressen mit lediglich einem Anteil (16) des Fruchtfleischs unterworfen wird, dass nach einem Entfernen der Schale eine oberste Schicht (13) des Fruchtfleischs am Außenumfang bzw. -bereich der Frucht (A) von einem Kernbereich (16) des Fruchtfleischs getrennt wird und diese zwei Anteile (13, 16) des voneinander getrennten Fruchtfleischs jeweils einem getrennten Pressvorgang (S3, S4) unterworfen werden, und dass der aus dem Entzuckerungsverfahren erhaltene Saft (15, 22) mit dem Saft (17, 20, 21) aus dem Pressen der Schale und gegebenenfalls dem Saft aus dem verbleibenden Anteil des Fruchtfleischs vereinigt bzw. gemischt wird.

2. Verfahren nach Anspruch 1, **dadurch gekennzeichnet, dass** die Trennung der obersten Schicht (13) des Fruchtfleischs am Außenumfang bzw. -bereich der Frucht (A) ähnlich einem Schälvorgang durchgeführt wird.

3. Verfahren nach Anspruch 1, **dadurch gekennzeichnet, dass** nach einem Entfernen der Schale eine Trennung des Fruchtfleischs in einen Kernbereich und einen am Außenumfang liegenden Anteil durch ein Entfernen, insbesondere Ausstanzen (S12) des Kernbereichs durchgeführt wird.

4. Verfahren nach Anspruch 1, 2 oder 3, **dadurch gekennzeichnet, dass** der vom Außenumfang der Frucht (A) zu trennende Anteil (13) des Fruchtfleischs zwischen 15 und 50 Vol.-%, insbesondere 25 bis 40 Vol.-% des gesamten Volumens des Fruchtfleischs entspricht.

5. Verfahren nach einem der Ansprüche 1 bis 4, **dadurch gekennzeichnet, dass** der aus dem Fruchtfleisch am Außenumfang der Frucht gewonnene Saft (14) einem Entzuckerungsverfahren durch Separation (S5), insbesondere Nanofiltration und/oder Diafiltration unterworfen wird.

6. Verfahren nach einem der Ansprüche 1 bis 5, **dadurch gekennzeichnet, dass** die Schale (11) mit dem Fruchtfleisch aus dem Kernbereich (16) der Frucht (A) in einem gemeinsamen Pressvorgang (S3) gepresst wird.

7. Verfahren nach Anspruch 1, **dadurch gekennzeichnet, dass** ein Anteil (19) des aus einem Pressen (S8) des gesamten Fruchtfleischs erhaltenen Safts einem Entzuckerungsverfahren durch Separation (S9), insbesondere einer Nanofiltration und/oder Diafiltration unterworfen wird.

8. Verfahren nach einem der Ansprüche 1 bis 7, **dadurch gekennzeichnet, dass** das Fruchtfleisch (12) bzw. die voneinander getrennten Anteile (13, 16) des Fruchtfleischs vor einem Pressen zerkleinert wird bzw. werden.

9. Verfahren nach einem der Ansprüche 1 bis 8, **dadurch gekennzeichnet, dass** ein durch das Entzuckerungsverfahren (S5, S9) entstandener Volumsverlust des Safts durch eine Zugabe flüssiger Bestandteile, insbesondere von Wasser (W) und/oder konventionell gepresstem und entzuckertem Fruchtsaft, ausgeglichen wird.

10. Verfahren nach einem der Ansprüche 1 bis 9, **dadurch gekennzeichnet, dass** durch Separation (S5, S9), insbesondere Nanofiltration und/oder Diafiltration eine Reduktion des Zuckergehalts des zu filtrierenden Anteils des Safts von wenigstens 50 %, insbesondere wenigstens 75 % vorgenommen wird.

11. Verfahren nach einem der Ansprüche 1 bis 10, **dadurch gekennzeichnet, dass** lediglich ein Teil (30) einer Charge einer zu verarbeitenden Frucht (A) einer Zuckerreduktion nach Entfernen (S1) der Schale unterworfen wird und der restliche Anteil (31) der Charge gemeinsam mit dem einer Zuckerreduktion nicht unterworfenen Anteil (16) des Fruchtfleischs und/oder der Schale (11) einem gemeinsamen Pressvorgang (S13) und einem nachfolgenden Vereinigen und Mischen (S6) mit dem aus dem Entzuckerungsverfahren erhaltenen Saft unterworfen wird.

12. Verfahren zur Herstellung eines zuckerreduzierten Apfelsafts durch Einstellung des Zuckergehalts des Fruchtsafts, **gekennzeichnet durch** ein Mischen eines gemäß einem Verfahren nach einem der Ansprüche 1 bis 10 hergestellten zuckerreduzierten Fruchtsafts mit einem konventionell ohne Zuckerreduktion hergestellten Fruchtsaft (33).

13. Verfahren zur Herstellung eines zuckerreduzierten Apfelsafts durch Einstellung des Zuckergehalts des Fruchtsafts, **gekennzeichnet durch** eine Behandlung eines Teils (30) einer Charge einer Frucht (A) gemäß einem Verfahren nach einem der Ansprüche 1 bis 10 zur Herstellung eines zuckerreduzierten Fruchtsafts und Mischen mit einem aus dem Rest (31) der Charge der Frucht (A) ohne Zuckerreduktion erhaltenen Fruchtsaft.

14. Verfahren nach Anspruch 12 oder 13, **dadurch gekennzeichnet, dass** der Anteil (30) des zuckerreduzierten Fruchtsafts mit wenigstens 35 Vol.-%, insbesondere wenigstens 50 Vol.-% gewählt wird.

**Claims**

1. A method for producing a sugar-reduced apple juice, wherein components of the fruit are pressed, in particular after an at least partial comminution or fractionation, for obtaining the fruit juice, wherein at least a part (14, 19) of the juice obtained from the pressed fruit flesh is subjected to an at least partial sugar-removal process (S5, S9), **characterized in that**, prior to the pressing process, the skin (11) of the fruit (A) is removed by peeling and the skin (11) is subjected to a separate pressing process, or a pressing process using only a part (16) of the fruit flesh, that after the removal of the skin, an uppermost layer (13) of the fruit flesh on the outer periphery or region of the fruit (A) is separated from a core region (16) of the fruit flesh, and these two parts (13, 16) of the separated fruit flesh are each subjected to a separate pressing process (S3, S4), and that the juice (15, 22) obtained from the sugar-removal process is combined or mixed with the juice (17, 20, 21) from the pressing process of the skin and optionally with the juice from the remaining part of the fruit flesh.

2. A method according to claim 1, **characterized in that** the separation of the uppermost layer (13) of the fruit flesh on the outer periphery or region of the fruit (A) is performed in the manner of a peeling process.

3. A method according to claim 1, **characterized in that**, after the removal of the skin, a separation of the fruit flesh into a core region and a part located on the outer periphery is performed by removing, in particular punching out (S12), the core region.

4. A method according to claim 1, 2 or 3, **characterized in that** the part (13) of the fruit flesh to be separated from the outer periphery of the fruit (A) corresponds to between 15 and 50 vol. %, in particular 25 to 40 vol.%, of the total volume of the fruit flesh.

5. A method according to any of the claims 1 to 4, **characterized in that** the juice (14) obtained from the fruit flesh on the outer periphery of the fruit is subjected to a sugar-removal process by separation (S5), in particular a nanofiltration and/or diafiltration.

6. A method according to any one of claims 1 to 5, **characterized in that** the skin (11) is pressed together with the fruit flesh from the core region (16) of the fruit (A) in a common pressing process (S3).

7. A method according to claim 1, **characterized in that** a part (19) of the juice obtained from a pressing process (S8) of the entire fruit flesh is subjected to a sugar-removal process by separation (S9), in particular a nanofiltration and/or diafiltration.

8. A method according to any one of claims 1 to 7, **characterized in that** the fruit flesh (12), or the separated fruit flesh parts (13, 16), is/are disintegrated prior to the pressing process.

9. A method according to any one of claims 1 to 8, **characterized in that** a volume loss of the juice caused by the sugar-removal process (S5, S9) is compensated by adding liquid components, in particular water (W) and/or conventionally pressed and desugared fruit juice.

10. A method according to any one of claims 1 to 9, **characterized in that** a reduction of the sugar content of the juice part to be filtered of at least 50%, in particular 75%, is effected by separation (S5, S9), in particular nanofiltration and/or diafiltration.

11. A method according to any one of claims 1 to 10, **characterized in that** only a part (30) of a batch of a fruit (A) to be processed is subjected to a sugar reduction after the removal (S1) of the skin and the remaining part (31) of the batch, together with the part (16) of the fruit flesh not subjected to a sugar reduction and/or the skin (11), is subjected to a common pressing process (S13) and subsequent combining and mixing (S6) with the juice obtained from the sugar-removal process.

12. A method for producing a sugar-reduced apple juice, by adjusting the sugar content of the fruit juice, **characterized by** mixing a sugar-reduced fruit juice produced according to a method according to any one of claims 1 to 10 with a conventionally produced fruit juice (33) without sugar reduction.

13. A method for producing a sugar-reduced apple juice, by adjusting the sugar content of the fruit juice, **characterized by** treating a part (30) of a batch of a fruit (A) according to a method according to any one of claims 1 to 10 for producing a sugar-reduced fruit juice and mixing with a fruit juice obtained from the remaining batch (31) of the fruit (A) without sugar reduction.

14. A method according to claim 12 or 13, **characterized in that** the part (30) of the sugar-reduced fruit juice is chosen to be at least 35 vol%, in particular at least 50 vol.%.

**Revendications**

1. Procédé de production d'un jus de pomme à teneur réduite en sucre, dans lequel les constituants du fruit sont pressés, en particulier après un broyage ou un fractionnement partiel pour obtenir le jus de fruit, dans lequel au moins une partie (14, 19) du jus obtenu à partir de la pulpe de fruit pressée est soumise à un processus de désucrage au moins partiel (S5, S9), **caractérisé en ce qu'**avant le pressage, la peau (11) du fruit (A) est retirée par pelage et la peau (11) est soumise à un pressage séparé ou à un pressage avec seulement une partie (16) de la pulpe, **en ce qu'**après l'enlèvement de la peau, une couche supérieure (13) de la pulpe sur la périphérie ou la zone externe du fruit (A) est séparée d'une zone centrale (16) de la pulpe et ces deux parties (13, 16) de la pulpe séparées l'une de l'autre sont chacune soumises à une opération de pressage séparée (S3, S4), et **en ce que** le jus (15, 22) obtenu à partir du processus de désucrage est combiné ou mélangé avec le jus (17, 20, 21) provenant du pressage de la peau et, le cas échéant, le jus de la partie restante de la pulpe.

2. Procédé selon la revendication 1, **caractérisé en ce que** la séparation de la couche supérieure (13) de la pulpe est effectuée sur la périphérie ou la zone extérieure du fruit (A) d'une manière similaire à une opération de pelage.

3. Procédé selon la revendication 1, **caractérisé en ce que**, après l'enlèvement de la peau, une séparation de la pulpe du fruit en une zone centrale et une partie située sur la périphérie extérieure est effectuée par enlèvement, en particulier par poinçonnage (S12) de la zone centrale.

4. Procédé selon la revendication 1, 2 ou 3, **caractérisé en ce que** la partie (13) de la pulpe du fruit à séparer de la périphérie extérieure du fruit (A) correspond à une proportion comprise entre 15 et 50% en volume, en particulier 25 à 40% en volume, du volume total de la pulpe du fruit.

5. Procédé selon l'une quelconque des revendications 1 à 4, **caractérisé en ce que** le jus (14) obtenu à partir de la pulpe du fruit sur la périphérie externe du fruit est soumis à un procédé de désucrage par séparation (S5), notamment nanofiltration et/ou diafiltration.

6. Procédé selon l'une quelconque des revendications 1 à 5, **caractérisé en ce que** la peau (11) est pressée avec la pulpe de la zone centrale (16) du fruit (A) dans une opération de pressage commune (S3).

7. Procédé selon la revendication 1, **caractérisé en ce qu'**une partie (19) du jus obtenu à partir d'un pressage (S8) de la pulpe entière est soumise à un procédé de désucrage par séparation (S9), notamment nanofiltration et/ou diafiltration.

8. Procédé selon l'une des revendications 1 à 7, **caractérisé en ce que** la pulpe de fruit (12) ou les parties séparées (13, 16) de la pulpe de fruit sont broyées avant le pressage.

9. Procédé selon l'une des revendications 1 à 8, **caractérisé en ce qu'**une perte de volume du jus résultant du processus de désucrage (S5, S9) est compensée par une addition de constituants liquides, en particulier d'eau (W) et/ou de jus de fruit pressé et désucré de manière classique.

10. Procédé selon l'une quelconque des revendications 1 à 9, **caractérisé en ce qu'**une réduction de la teneur en sucre de la fraction du jus à filtrer d'au moins 50%, notamment d'au moins 75%, est réalisée par séparation (S5, S9), notamment par nanofiltration et/ou diafiltration.

11. Procédé selon l'une des revendications 1 à 10, **caractérisé en ce que** seulement une partie (30) d'un lot d'un fruit (A) à traiter est soumise à une réduction du sucre après élimination (S1) de la peau, et la partie restante (31) du lot, conjointement avec la partie (16) de la pulpe et/ou de la peau (11) du fruit non soumise à une réduction du sucre, est soumise à une opération de pressage conjointe (S13), puis à une combinaison et un mélange (S6) avec le jus obtenu à partir du processus de désucrage.

12. Procédé de production d'un jus de pomme à teneur réduite en sucre par ajustement de la teneur en sucre du jus de fruit, **caractérisé par** le mélange d'un jus de fruit à teneur réduite en sucre produit selon un procédé selon l'une quelconque des revendications 1 à 10 avec un jus de fruit (33) produit de manière conventionnelle sans réduction de sucre.

13. Procédé de production d'un jus de pomme à teneur réduite en sucre par ajustement de la teneur en sucre du jus de fruit, **caractérisé par** le traitement d'une partie (30) d'un lot d'un fruit (A) par un procédé selon l'une quelconque des revendications 1 à 10 pour produire un jus de fruit à teneur réduite en sucre et son mélange avec un jus de fruit obtenu à partir du reste (31) du lot du fruit (A) sans réduction de sucre.

14. Procédé selon la revendication 12 ou la revendication 13, **caractérisé en ce que** la partie (30) du jus de fruit à teneur réduite en sucre est choisie pour être d'au moins 35% en volume, notamment d'au moins 50% en volume.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5403604 A

- US 20060105089 A1

**In der Beschreibung aufgeführte Nicht-Patentliteratur**

- **ANKA CEBULJ ; VLASTA CUNJA ; MAJA MIKULIC-PETKOVSEK ; ROBERT VEBERIC.** Importance of metabolite distribution in apple fruit. *Scientia Horticulturae,* 05. Januar 2017, vol. 214, 214-220